# EUROPEAN PATENT SPECIFICATION

(11) **EP 4 391 233 B1**
(45) Date of publication and mention of the grant of the patent: **30.09.2026**
(21) Application number: 22216617.5
(22) Date of filing: 23.12.2022
(51) Int. Cl.: H01Q 15/18, G01S 7/40, G01S 13/90

(54) **SATELLITE RADAR BEAM REFLECTOR**
SATELLITENRADARSTRAHLENREFLEKTOR
RÉFLECTEUR DE FAISCEAU RADAR POUR SATELLITE

(43) Date of publication of application: 26.06.2024
(73) Proprietor: Iceye Oy, 02150 Espoo (FI)
(72) Inventor: WOLLERSHEIM, Michael, 02150 Espoo (FI); CRAWFORD, Scott, 02150 Espoo (FI); MILLER, Trevor, 02150 Espoo (FI)
(74) Representative: Crowell & Moring U.K. LLP

(56) References cited:
- CN-A- 103 217 665
- CN-A- 107 505 605
- CN-A- 107 807 350
- CN-A- 108 931 762
- CN-U- 205 246 865
- DE-A1- 102007 001 833
- US-A1- 2020 341 113

## Description

### FIELD

The present disclosure relates to radar reflectors and in particular to a reflector for reflecting a radar beam emitted by a satellite.

### BACKGROUND

Persistent Scatterer Interferometry (PSI) is generally used by synthetic aperture radar (SAR) satellites for measuring millimeter-scale subsidence and deformation of targets, and its use is widespread and is becoming ubiquitous. One challenge with this technology, however, is that it is so precise that it can be difficult to validate, since few other technologies are as precise.

Radar reflectors are devices used to reflect radar beams back to the satellites that emitted the beams. Radar reflectors may be used for a variety of purposes, and in particular for validating the precision of measurements taken by synthetic aperture radar (SAR) satellites. Typical radar reflectors, however, tend to be large, and difficult to construct and transport, since they are typically designed to be stable and unmoving.

CN-A-107505605 and CN107807350A disclose a conventional experimental calibration system.

### SUMMARY

According to a first aspect of the disclosure, there is provided a reflector as defined in claim 1 hereinafter.

The reflecting assembly may comprise: at least a first reflecting plate and a second reflecting plate. Each reflecting plate may be removably attached to each other reflecting plate. The reflecting assembly may be disassembled by detaching each reflecting plate from each other reflecting plate. The reflecting assembly may further comprise a third reflecting plate removably attached to each other reflecting plate and meeting each other reflecting plate at a right angle.

The reflector may further comprise a radar-absorbing material provided over at least a portion of the mounting assembly, for preventing multi-path reflections of the beam.

The reflecting assembly may define a vertex at which each of the reflecting plates meet. The reflecting assembly may further comprise a drain hole adjacent the vertex for allowing water that has been collected by the reflecting assembly to drain out of the reflecting assembly.

The reflecting assembly may be shaped as a dihedral, a trihedral, a sphere, or a top-hat.

The single linear translator may comprise a screw jack.

At least one turn of the screw jack may result in 1 mm of linear translation of the reflecting assembly. At least one of the first and second reflecting plates may comprise a male member. At least the other of the first and second reflecting plates may comprise a female member for receiving the male member.

The reflecting assembly may define a concave side for reflecting the beam and a convex side opposite the concave side. The reflecting assembly may further comprise at least one intermediate connector on the convex side. The intermediary connector may comprise at least two apertures for receiving removable fasteners to secure the intermediary connector to the reflecting plate with the male member and to the reflecting plate with the female member.

The reflecting assembly is for reflecting the beam back to a synthetic aperture radar (SAR) satellite.

According to a further aspect of the disclosure, there is provided a method as defined in claim 12 hereinafter.

This summary does not necessarily describe the entire scope of all aspects. Other aspects, features and advantages will be apparent to those of ordinary skill in the art upon review of the following description of specific embodiments.

### BRIEF DESCRIPTION OF THE FIGURES

In order that the present disclosure may be more readily understood, preferable embodiments thereof will now be described, by way of example only, with reference to the accompanying drawings, in which:
FIG. 1 shows a modular radar reflector according to an embodiment of the disclosure;
FIG. 2 shows a reflecting assembly of the modular radar reflector of FIG. 1, according to an embodiment of the disclosure;
FIG. 3 shows a tilt assembly of the modular radar reflector of FIG. 1, according to an embodiment of the disclosure;
FIG. 4 shows a screw jack base of the modular radar reflector of FIG. 1, according to an embodiment of the disclosure;
FIG. 5 shows a screw jack of the modular radar reflector of FIG. 1, according to an embodiment of the disclosure;
FIG. 6 shows a linear translator assembly including the screw jack base of FIG. 4 and the screw jack of FIG. 5, according to an embodiment of the disclosure;
FIG. 7 shows a magnified view of a portion of the screw jack base of FIG. 4, according to an embodiment of the disclosure;
FIG. 8 shows the reflecting assembly of FIG. 2 being mounted to the tilt assembly of FIG. 3, according to an embodiment of the disclosure;
FIG. 9 shows reflecting plates of the reflecting assembly of FIG. 2, according to an embodiment of the disclosure;
FIG. 10 shows the interconnection of a tab and a slit of different reflecting plates of the reflecting assembly of FIG. 2, according to an embodiment of the disclosure; and
FIG. 11 shows a modular radar reflector mounted atop a screw pile, according to an embodiment of the disclosure.

### DETAILED DESCRIPTION OF THE DISCLOSURE

The present disclosure seeks to provide an improved radar reflector for reflecting a radar beam emitted by a satellite, as well as new methods of deploying/using such reflectors. While various embodiments of the disclosure are described below, the disclosure is not limited to these embodiments, and variations of these embodiments may well fall within the scope of the disclosure which is to be limited only by the appended claims.

Furthermore, while embodiments of the disclosure are generally discussed in the context of reflecting a radar beam emitted by a satellite, such as a SAR satellite, the disclosure extends to reflecting a radar beam emitted by an aircraft (such as a SAR aircraft), or more generally any suitable airborne or spaceborne source.

Generally, according to embodiments of the disclosure, there is provided a reflector for reflecting a radar beam emitted by an airborne or spaceborne source, such as a satellite. The reflector includes a reflecting assembly for reflecting the beam (or more generally, at least some of the beam) back to the source, and a single linear translator configured to translate the reflecting assembly. The linear translator may allow for fine adjustment in the vertical and/or horizontal directions, for example by one or more millimeters at a time. For example, in the context of a screw jack or some other rotary-linear motion converter, at least one turn of the input shaft may translate into 1 mm of linear motion. In particular, between 0.25 and 50 turns may translate into 1 mm of linear motion, or more particularly between 0.5 and 20 turns per mm, or even more particularly between 0.25 and 50 turns per mm. Such adjustments may be used to mimic land subsidence or heave, and for the subsequent validation of SAR satellite measurements.

The linear translator may be further configured to translate the reflecting assembly as a whole. As described in further detail below, the linear translator is configured to translate the reflecting assembly together with the tilt assembly. A screw jack mechanism may be used to implement the vertical and/or horizontal adjustment. By using a single linear translator (and no other linear translator), only the single linear translator may be required to translate the reflecting assembly as a whole.

According to some embodiments, the reflecting assembly may be modular and may include at least a first reflecting plate and a second reflecting plate. Each reflecting plate is removably attached to (or held in position relative to) each other reflecting plate. The reflecting assembly may therefore be disassembled by detaching each reflecting plate from each other reflecting plate. The reflecting assembly may be subsequently reassembled by reattaching each reflecting plate to each other reflecting plate. According to some embodiments, a tab-and-slit design may be used to hide any mounting bolts behind the reflecting plates so as to avoid them interfering with the radar beam.

Advantageously, the modular design of the reflector enables the reflector to be easily disassembled and reassembled at a different location, for example. The modular design of the reflector may also enable the reflecting assembly to be stored in a space-efficient and compact manner. For example, once disassembled, the individual reflecting plates may be stacked together for ease of storage and transportation.

In addition to a reflecting assembly, the reflector may additionally include a mounting assembly comprising a number of different components described in further detail below. Generally, the reflecting assembly is also removably attached to the mounting assembly, and, during disassembly of the modular reflector, the reflecting assembly is detached from the mounting assembly. Generally, the modular reflector, and in particular one or more components of the mounting assembly, may interface conveniently with permanent anchoring mechanisms such as concrete piles or pillars, and helical screw piles.

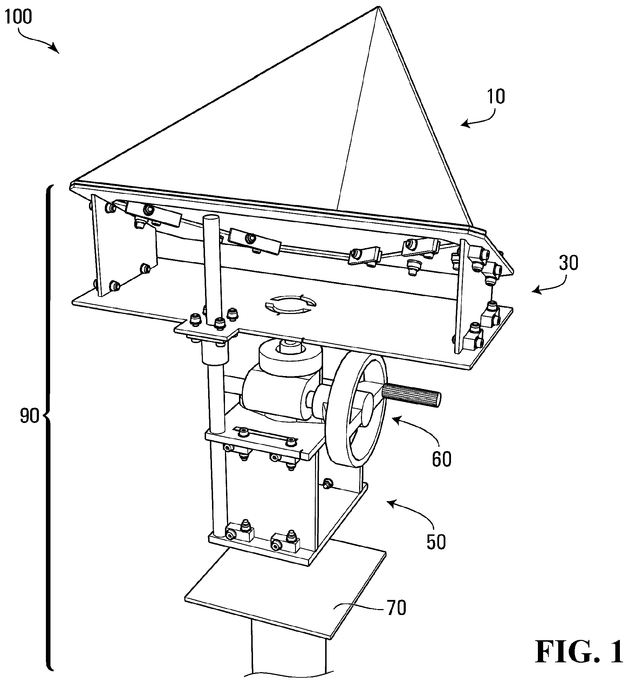

Turning to FIG. 1, there is shown a modular reflector 100 for reflecting a radar beam emitted by a satellite, according to an embodiment of the disclosure. Modular reflector 100 includes a reflecting assembly 10 mounted atop a mounting assembly 90. Mounting assembly 90 includes a tilt assembly 30 secured to reflecting assembly 10, and a linear translating assembly, including a screw jack base 50 and a screw jack 60, secured to tilt assembly 30. According to certain embodiments, mounting assembly 90 may also include a ground-anchoring device 70 such as a screw pile, for anchoring modular reflector 100 in the ground.

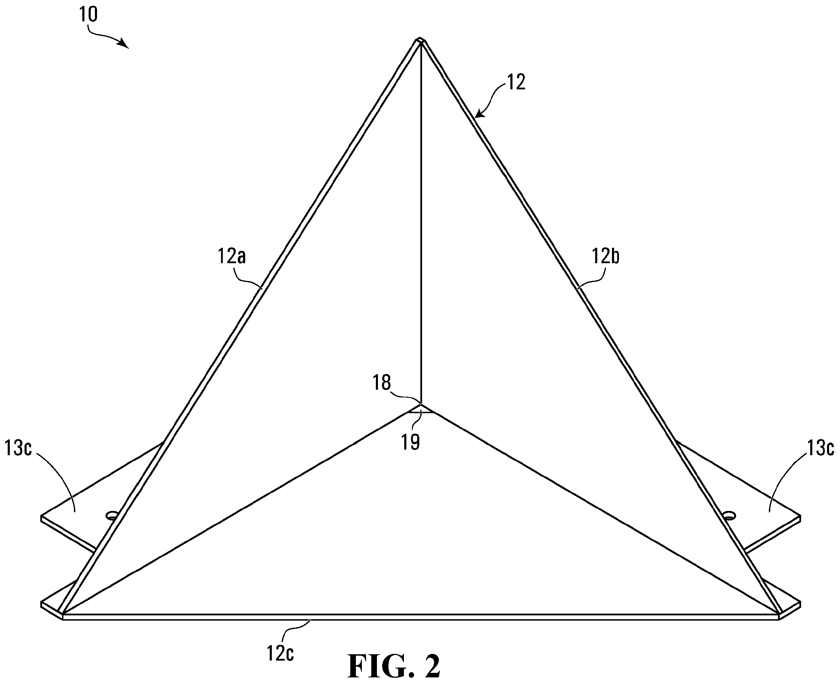

Turning to FIG. 2, there is shown reflecting assembly 10 in more detail. In particular, reflecting assembly 10 includes first, second, and third reflecting plates 12a, 12b, 12c arranged in a trihedral configuration. Each reflecting plate 12 is generally triangular-shaped and meets each other reflecting plate 12 at a right angle, and together reflecting plates 12 define a vertex 18 of reflecting assembly 10. According to other embodiments, reflecting plates 12 need not be triangular and instead may be, for example, rectangular or square in shape. Reflecting plates 12 are typically, but not necessarily, constructed from aluminium due to its rust resistance, relatively low weight, and relatively low thermal expansion coefficient. For larger reflecting plates, thicker plates may be used in order to mitigate bending or flexing of the plates.

Although reflecting assembly 10 is shown as having a trihedral configuration, reflecting assembly 10 could, according to other embodiments, comprise reflecting plates joined to form any other suitable configuration. For example, reflecting assembly 10 may have a dihedral configuration. Other reflector configurations may also be used, such as a spherical configuration, a top-hat configuration, or other radar reflecting assemblies as known in the art. According to some embodiments, the reflecting plates or other parts of the reflector may be warmed electrically, for example to help prevent snow accumulation. This can be accomplished, for example, by using heating tapes readily available for preventing the freezing of pipes, or by heating pads applied to the rear, non-radar-reflecting sides of the reflector.

As described in further detail below, each reflecting plate 12 is detachably connected to each other reflecting plate 12. According to the embodiments shown the various drawings, the interconnection between reflecting plates 12 is provided by means of tabs and slits, with the tabs being inserted into the slits. More generally, however, each reflecting plate 12 may be detachably connected to each other reflecting plate 12 using any suitable combination of male and female members. Other forms of interconnection may be used, provided that such interconnection allows for relatively easy decoupling of reflecting plates 12.

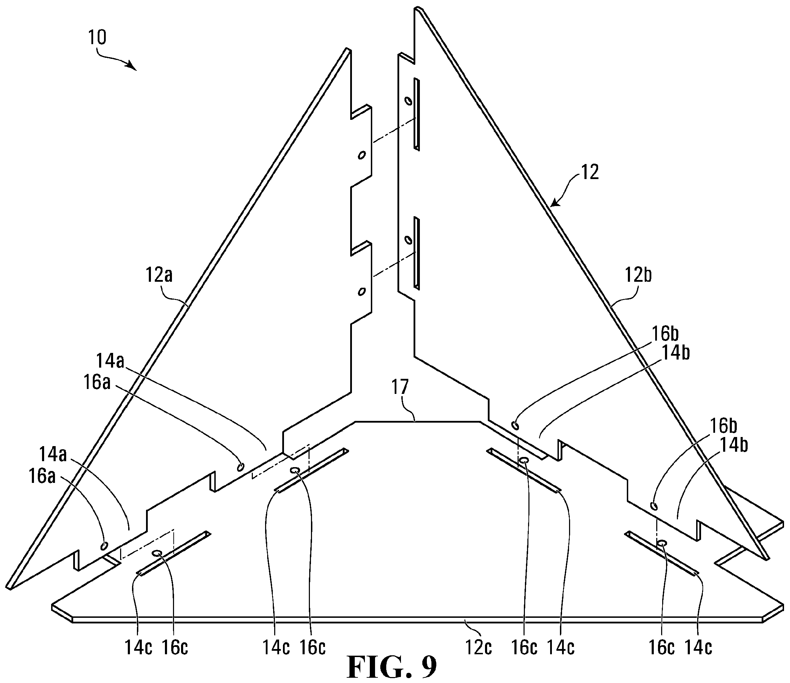

Adjacent vertex 18 of reflecting assembly 10 is provided a drain hole 19. As can be seen in FIG. 9, drain hole 19 is formed as a result of the joining of reflecting plates 12 and with reflecting plate 12c comprising a cutaway portion 17 at a corner thereof. Drain hole 19 provides at least two functions. In particular, drain hole 19 allows water (such as rainwater) that has been collected by reflecting assembly 10 to drain out of reflecting assembly 10, by flowing out of drain hole 19. In addition, as described in further detail below, drain hole 19 may assist a user in precisely aligning modular reflector 100 relative to surveyed control points.

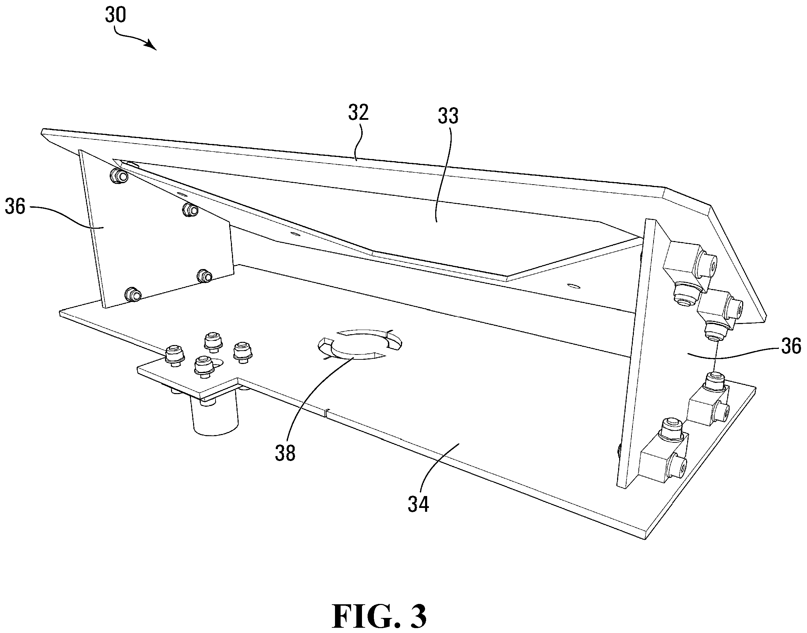

Turning to FIG. 3, there is shown tilt assembly 30 in greater detail. Tilt assembly 30 comprise an upper tilt assembly portion 32 connected to a lower tilt assembly portion 34 using a pair of upright supports 36. Upper tilt assembly portion 32 is tilted relative to lower tilt assembly portion 34 at a preset angle. The tilt angle in the present embodiment is 30°, but according to other embodiments the tilt angle may be different. Tilt assembly 30 further includes a pair of semi-circular apertures 38 provided in lower tilt assembly portion 34 us for securing tilt assembly 30 to a screw jack 60, as described in further detail below. Tilt assembly 30 is used to increase the acceptance angle of modular reflector 100 and to enable a consistent radar cross section (RCS) throughout the acceptance angle, which is the range of angles over which the modular reflector is able to reflect radar signals back to the source.

As also described in further detail below, in order to secure reflecting assembly 10 to tilt assembly 30, reflecting plate 12c is removably attached to upper tilt assembly portion 32. According to other embodiments, more than one reflecting plate 12 may be removably attached to upper tilt assembly portion 32. When modular reflector 10 is anchored in the ground, lower tilt assembly portion 34 is oriented in the horizontal direction, resulting in reflecting assembly 10 being tilted relative to the horizontal at the tilt angle defined by tilt assembly 30.

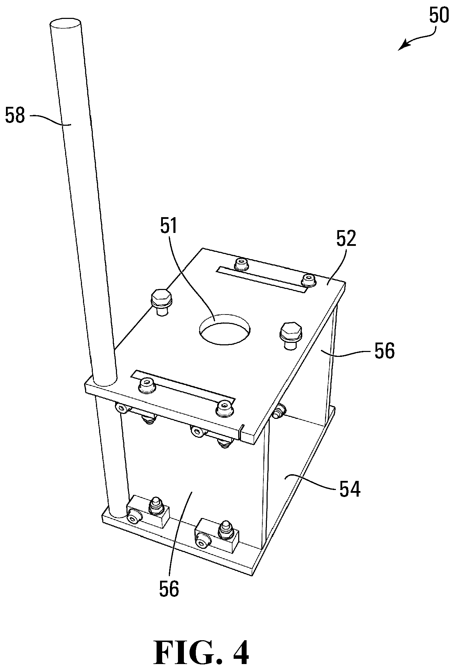

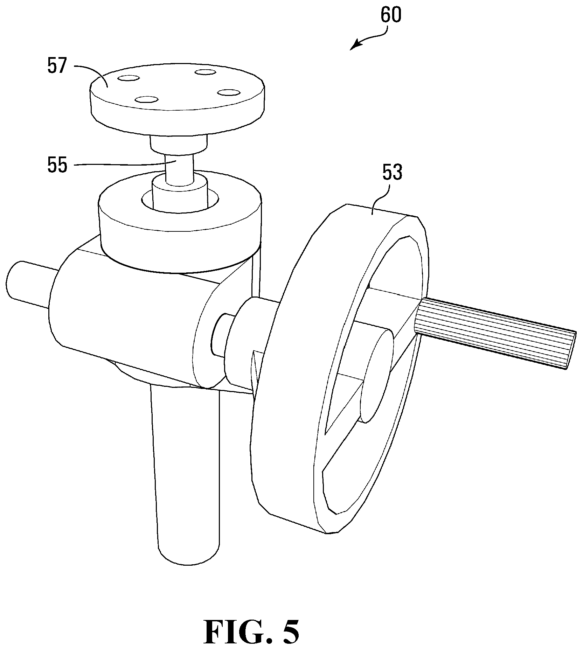

Turning to FIG. 4, there is shown a screw jack base 50 forming part of a linear translator assembly that also includes screw jack 60 (described in further detail in FIG. 5). Screw jack base 50 includes an upper base portion 52 secured to a lower base portion 54 by upright supports 56. A guide rod 58 is secured to lower base portion 54 and extends upwardly through upper base portion 52. Upper base portion 52 comprises an aperture 51 formed therein for receiving screw jack 60, as described in further detail below.

Turning to FIG. 5, there is shown screw jack 60 in greater detail. Screw jack 60 includes a manual crank 53 geared to a vertically-oriented driven shaft 55. Rotation of crank 53 causes driven shaft 55 to translate in the vertical direction. A top plate 57 is provided at the upper end of driven shaft 55 and is configured to be fixedly attached to lower tilt assembly portion 34 of tilt assembly 30. The screw jack is a modular component and any one of many commercially-available screw jacks can be used. In an embodiment, a worm gear screw jack from Nook Industries Inc. of Cleveland, Ohio, may be used and may provide 1 mm of translation for every 8 turns of the input shaft. In another embodiment, the screw jack may provide 1 mm of translation for every 1.7 turns of the input shaft. In some embodiments, a screw jack with a stainless steel screw/shaft and an aluminium body may be used to provide for better resistance to the elements and to minimize corrosion. An example of such a screw jack is the WJ250 series model WJ250U2S-4-HW04-STDX-X screw jack available from Joyce/Dayton Corporation of Kettering, Ohio, USA. Other screw jacks can be used for providing adequate precision in translating the reflector small distances, such as 1 mm. For example, according to some embodiments, screw jacks that provide 1 mm of translation for every one or more turns of the input shaft can be used.

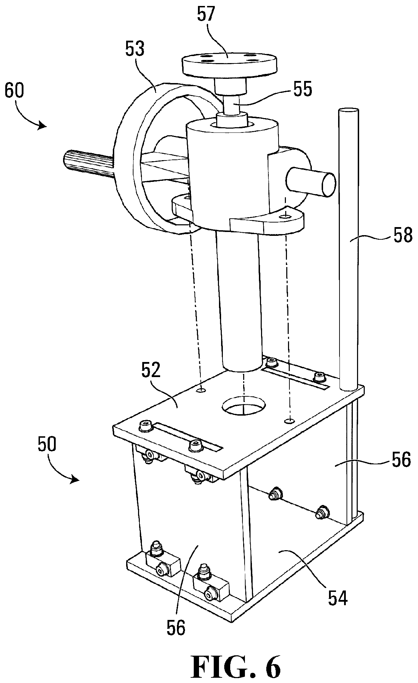

Turning to FIG. 6, there is shown screw jack 60 being secured to screw jack base 50. As can be seen, the lower portion of screw jack 60 is inserted into aperture 51, and screw jack 60 can then be secured to upper base portion 52 using, for example, a pair of fasteners.

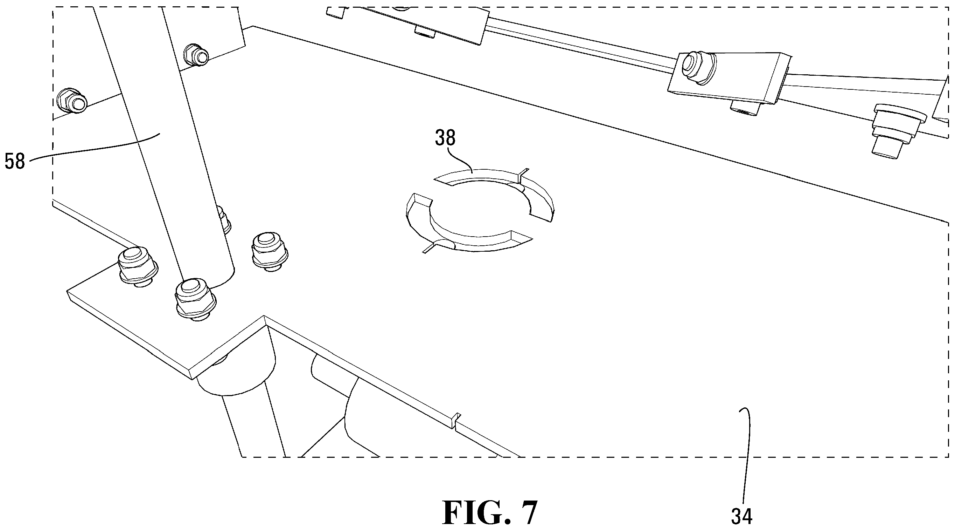

FIG. 7 shows the interconnection of tilt assembly 30 to screw jack 60 and screw jack base 50. As can be seen, tilt assembly 30 is mounted to screw jack base 50 with guide rod 58 being passed through an aperture formed in lower tilt assembly portion 34. In addition, top plate 57 of screw jack 60 is secured to the underside of lower tilt assembly portion 34 using, for example, bolts with washers passing downwardly through semi-circular apertures 38, through holes in top plate 57, and then fastened with washers and nuts affixed under top plate 57.

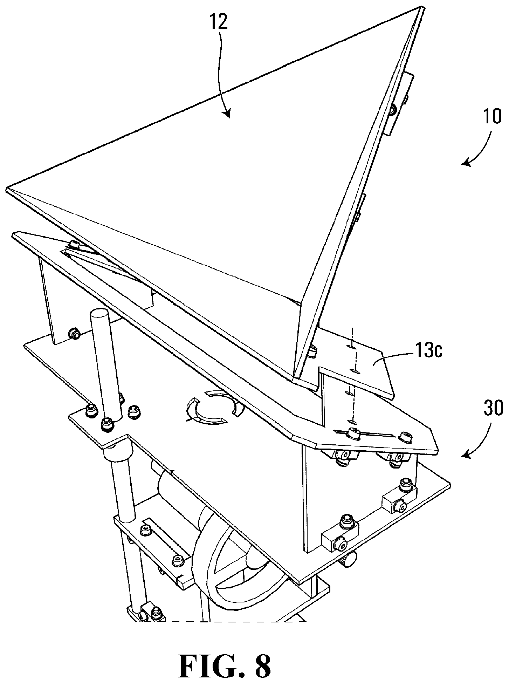

FIG. 8 shows the mounting of reflecting assembly 10 to tilt assembly 30. As can be seen, reflecting plate 12c includes an extension 13c extending away from the triangular portion of reflecting plate 12c. Extension 13c is secured to upper tilt assembly portion 32 using fasteners. An additional extension 13c can be seen in FIG. 2 (though not in FIG. 8), and this additional extension 13c is also secured to upper tilt assembly portion 32 using fasteners. When tilt assembly 30 is mounted atop screw jack base 50, guide rod 58 can be seen extending through an aperture provided in lower tilt assembly portion 34. As can be seen in FIG. 3, a large central aperture 33 is provided in upper tilt assembly portion 32 to accommodate intermediary connecting members 18 connecting reflecting plates 12a and 12b to reflecting plate 12c, as described in further detail below.

Turning now to FIG. 9, there is shown a view of reflecting plates 12 of reflecting assembly 10 in their decoupled state. Reflecting plate 12a and reflecting plate 12b each include a pair of respective rectangular tabs 14a, 14b extending from the main triangular portions of reflecting plates 12a, 12b. Reflecting plate 12c includes two pairs of rectangular slots 14c the main triangular portion of reflecting plate 12c, for receiving tabs 14a, 14b therethrough. As can also be seen, each tab 14a, 14b includes an aperture 16a, 16b formed therethrough, while reflecting plate 12c includes apertures 16c extending therethrough and adjacent to slots 14c. In order to assemble reflecting plates 12 into the trihedral reflecting assembly 10 shown in FIG. 1, reflecting plates 12 are interconnected by inserting tabs 14a, 14b through slots 14c.

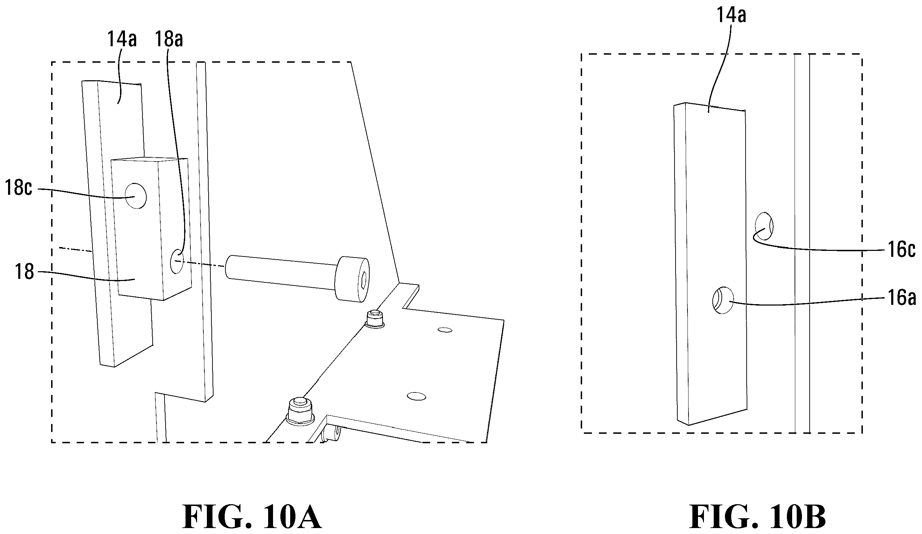

Turning now to FIG. 10, there is shown a detailed view of tab 14a inserted through one of slots 14c. When tab 14a is inserted through slot 14c, apertures 16a and 16c are offset from one another. An intermediary connecting member 18 may then be used to secure reflecting plate 12a to reflecting plate 12c. Intermediary connecting member 18 includes a pair of apertures 18a, 18c also offset from one another. When intermediary connecting member 18 is correctly positioned relative to tab 14a and slot 14c, apertures 18a and 18c of intermediary connecting member 18 are respectively aligned with 16a and 16c. Fasteners (such as bolts) may then be passed through the aligned apertures to secure reflecting plate 12a and reflecting plate 12c. Reflecting plate 12b may be similarly secured to reflecting plate 12c. As can be seen in FIG. 10, intermediary connecting member 18 is provided on the rear sides of reflecting plates 12 so as not to interfere with beams being reflected by reflecting plates 12. The rear sides of reflecting plates 12 may define a convex side of reflecting assembly 10, and the opposite, beam-reflecting sides of reflecting plates 12 may define a concave side of reflecting assembly 10.

Again, it shall be recognized that the use of tabs and slots is only one example way of interconnecting the reflecting plates, and any other suitable means may be employed. The disclosure additionally extends to the use of any type, size, and/or shape of intermediary connecting member, such as an L-shaped bracket.

In use, in order to adjust the position of reflecting assembly 10 in the vertical direction, a user may operate screw jack 60 by rotating crank 53 and thereby causing driven shaft 55 to translate vertically. The gearing ratio between crank 53 and driven shaft 55 may be configured such that a relatively large number of turns of crank 53 results in a relatively small degree of vertical motion of tilting assembly 30 and reflecting assembly 10. For example, according to one embodiment, about eight turns of crank 53 may result in about 1 mm of vertical translation. In another embodiment, 1.7 turns of crank 53 may result in about 1 mm of vertical translation. Guide rod 58 ensures that translation of tilting assembly 30 and reflecting assembly 10 is as close as possible to the vertical, as well as helping to stabilize the whole assembly. Only one guide rod is shown in FIGS. 7, 8, and 11, but two or more guide rods can be used to provide additional stability. Set screws can also be used to clamp the guide rod or rods more firmly and to further minimize any movement of the reflector once the reflector's height has been set by the screw jack.

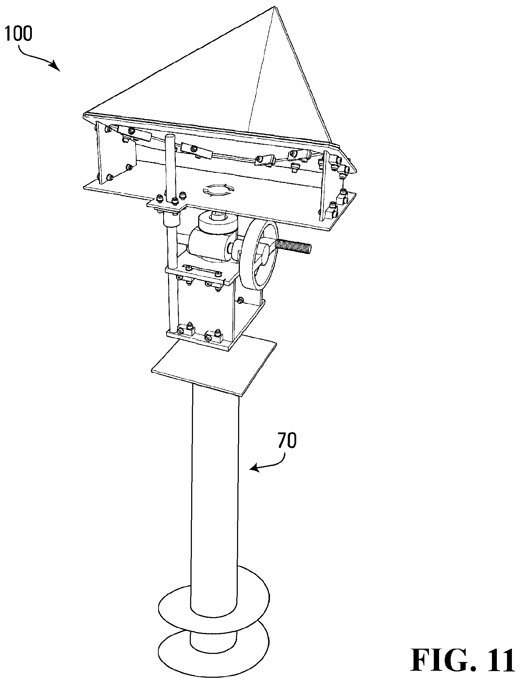

When modular reflector 100 is deployed in the field, modular reflector 100 may be anchored to the ground using, for example, a screw pile 70. Screw piles (an example of which is shown in FIG. 11 in an exploded view, with the screw pile separated from the screw jack and the radar reflector) typically extend relatively deep into the ground and therefore are less susceptible to vertical displacement due to land subsidence or heave. For example, a screw pile may extend to a depth of at least 4 feet, and can be extended to any required depth by attaching screw pile extension to increase the depth of the screw pile until the required load bearing / stability is achieved. The bottom of screw jack base 50 may be secured directly to screw pile 70, for example as shown in FIG. 1. By securing modular reflector 100 to a stable, unmoving support such as a screw pile or a concrete pile, modular reflector 100 may only be displaced in response to simulated deformation movement (i.e. simulated by the linear translating assembly). Other methods of attaching the modular reflector to the ground in a fixed manner are also possible, including for example attaching the modular reflector to an existing structure that is already well-anchored to the ground.

In order to deploy modular reflector 100 in the field such that its position may be precisely known, drain hole 19 adjacent vertex 18 is configured to allow centering of vertex 18 over a surveyed ground control point that has been established, for example, by a professional surveyor. As a result, the three-dimensional position of modular reflector 100 can be known in a geospatial coordinate system.

In order to disassemble modular reflector 100, reflecting assembly 10 may be detached from tilt assembly 30 by removing the fasteners passing through extensions 13c of reflecting plate 12c. Reflecting plates 12 may then be disconnected from one another and stacked one on top of each other, for ease of storage and transportation. To help with storage and transport, the modular reflector can be packed into a case, for example the plastic cases designed to protect expensive equipment, made by Nanuk of Terrebonne, Québec, Canada.

It shall be recognized that the use of a screw jack is only one example means of imparting vertical motion to tilt assembly 30 and reflecting assembly 10, and according to various other embodiments other linear translators may be used, such as a hydraulic jack. According to still further embodiments, an electronically-actuated shape memory alloy may be used to eliminate any moving parts. The vertical displacement of reflecting assembly 10 may also be controlled wirelessly, using a suitable wireless communication transmitter and received.

According to some embodiments, one or more of the linear translating assembly (e.g. screw jack base 50 and screw jack 60) and tilt assembly 30 may comprise a Radar-Absorbing Material (RAM) to reduce any potential multipath of radar signals transmitted at reflector 100.

According to some embodiments, a Radar-Transparent Material (RTM) may cover at least a portion of reflector 100 and/or mounting assembly 90 (e.g. screw jack base 50 and screw jack 60), for shielding reflector 100 and/or mounting assembly 90 from the elements while still allowing radar signals to pass through. For example, the RTM could be a dome or a roof that covers reflector 100 and/or mounting assembly 90 for keeping snow and rain off reflector 100 and/or mounting assembly 90, and/or for helping to shed snow and water.

The present disclosure also extends to reflectors that include only the linear translator described herein. For such reflectors, the reflecting plates need not be modular. For example, for such reflectors, the reflecting plates may be permanently affixed together, for example via welding, or can be formed from a single piece of material in such a way that they don't need to be connected/disconnected.

Equally, embodiments of the disclosure may extend only to a modular reflector as described herein, but without the single linear translator (or, alternatively, with more than one linear translator).

The terms "a" or "an" when used in conjunction with the terms "comprising" or "including" in the claims and/or the specification can mean "one" but it is also consistent with the meaning of "one or more", "at least one", and "one or more than one" unless the content clearly dictates otherwise. Similarly, the word "another" may mean at least a second or more, unless the content clearly dictates otherwise.

The terms "coupled", "coupled", or "connected" as used herein, may have a number of different meanings depending on the context in which the terms are used. For example, the terms coupled, or connected may have a mechanical or electrical meaning. For example, as used herein, the terms coupled, or connected may indicate that two elements or devices are connected to each other directly or via one or more intermediate elements or devices via electrical, or mechanical elements, depending on the particular context. The term "and/or" as used herein when used in association with a list of items refers to any one or more of the items comprising the list.

As used herein, reference to "about" or "approximately" a number or "substantially" is equal to a number means within +/-10% of the number.

While the disclosure has been described in connection with specific embodiments, it is to be understood that the disclosure is not limited to these embodiments, and that alterations, modifications, and variations of these embodiments may be carried out by the skilled person without departing from the scope of the disclosure as defined by the appended claims.

It is furthermore contemplated that any part of any aspect or embodiment discussed in this specification can be implemented or combined with any part of any other aspect or embodiment discussed in this specification.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Although certain example embodiments of the invention have been described, the scope of the appended claims is not intended to be limited solely to these embodiments.

## Claims

1. A reflector (100) for reflecting a radar beam emitted by an airborne or spaceborne source, comprising:
a reflecting assembly (10) for reflecting the beam back to the source;
a single linear translator (60) configured to translate the reflecting assembly; and
a tilt assembly (30) having a horizontal lower tilt assembly portion (34) and a tilted upper tilt assembly portion (32), wherein the upper tilt assembly portion is removably attached to the reflecting assembly and tilted relative to the lower tilt assembly portion such that the reflecting assembly is tilted relative to the horizontal, and wherein the upper tilt assembly portion is tilted relative to the lower tilt assembly portion at an angle of from 0 degrees to 45 degrees,
wherein the single linear translator is configured to translate the reflecting assembly in the vertical direction with the reflecting assembly oriented to reflect the beam back to the airborne or spaceborne source.

2. The reflector of claim 1, wherein the reflecting assembly comprises:
at least a first reflecting plate (12a) and a second reflecting plate (12b), wherein each reflecting plate is removably attached to each other reflecting plate,
wherein the reflecting assembly may be disassembled by detaching each reflecting plate from each other reflecting plate.

3. The reflector of claim 2, wherein:
the reflecting assembly defines a vertex at which each of the reflecting plates meet; and
the reflecting assembly further comprises a drain hole (19) adjacent the vertex for allowing water that has been collected by the reflecting assembly to drain out of the reflecting assembly.

4. The reflector of claim 2 or 3, wherein the reflecting assembly further comprises a third reflecting plate (12c) removably attached to each other reflecting plate and meeting each other reflecting plate at a right angle.

5. The reflector of any one of claims 2-4, wherein:
at least one of the first and second reflecting plates comprises a male member (14a, 14b); and
at least the other of the first and second reflecting plates comprises a female member (14c) for receiving the male member.

6. The reflector of claim 5, wherein:
the reflecting assembly defines a concave side for reflecting the beam and a convex side opposite the concave side;
the reflecting assembly further comprises at least one intermediate connector (18) on the convex side; and
the intermediary connector comprises at least two apertures (18a, 18c) for receiving removable fasteners to secure the intermediary connector to the reflecting plate with the male member and to the reflecting plate with the female member.

7. The reflector of any one of claims 1-6, further comprising a radar-absorbing material for preventing multi-path reflections of the beam.

8. The reflector of any one of claims 1-7, wherein the reflecting assembly is shaped as a dihedral, a trihedral, a sphere, or a top-hat.

9. The reflector of any one of claims 1-8, wherein the single linear translator comprises a screw jack.

10. The reflector of claim 9, wherein at least one turn of the screw jack results in 1 mm of linear translation of the reflecting assembly.

11. The reflector of any one of claims 1-10, wherein the reflecting assembly is for reflecting the beam back to a synthetic aperture radar (SAR) satellite.

12. A method of deploying a reflector (100) for reflecting a radar beam emitted by an airborne or spaceborne source, wherein:
the reflector comprises:
a reflecting assembly (10) for reflecting the beam back to the source;
a mounting assembly (90) and a single linear translator (60) configured to translate the reflecting assembly in the vertical direction with the reflecting assembly oriented to reflect the beam back to the airborne or spaceborne source; and
a tilt assembly having a horizontal lower tilt assembly portion and a tilted upper tilt assembly portion, wherein the upper tilt assembly portion is removably attached to the reflecting assembly and tilted relative to the lower tilt assembly portion such that the reflecting assembly is tilted relative to the horizontal, and wherein the upper tilt assembly portion is tilted relative to the lower tilt assembly portion at an angle of from 0 degrees to 45 degrees; and
the method comprises:
attaching the reflector to the ground such that the reflector is less susceptible to vertical displacement due to land subsidence or heave.

13. The method of claim 12, wherein the mounting assembly further comprises a screw pile (70), and wherein attaching the modular reflector to the ground comprises anchoring the reflector in the ground by driving the screw pile in the ground.

## Patentansprüche

1. Reflektor (100) zum Reflektieren eines Radarstrahls, der von einer luftgestützten oder weltraumgestützten Quelle emittiert wird, der umfasst:
eine reflektierende Anordnung (10) zum Reflektieren des Strahls zu der Quelle zurück;
einen einzigen linearen Verschieber (60), der dazu konfiguriert ist, die reflektierende Anordnung zu verschieben; und
eine Neigungsanordnung (30), die einen horizontalen unteren Neigungsanordnungsabschnitt (34) und einen geneigten oberen Neigungsanordnungsabschnitt (32) aufweist, wobei der obere Neigungsanordnungsabschnitt abnehmbar an der reflektierenden Anordnung angebracht und in Bezug auf den unteren Neigungsanordnungsabschnitt derart geneigt ist, dass die reflektierende Anordnung in Bezug auf die Horizontale geneigt ist, und wobei der obere Neigungsanordnungsabschnitt in Bezug auf den unteren Neigungsanordnungsabschnitt in einem Winkel von 0 Grad bis 45 Grad geneigt ist,
wobei der einzige lineare Verschieber dazu konfiguriert ist, die reflektierende Anordnung in der vertikalen Richtung zu verschieben, wobei die reflektierende Anordnung dazu ausgerichtet ist, den Strahl zu der luftgestützten oder weltraumgestützten Quelle zurück zu reflektieren.

2. Reflektor nach Anspruch 1, wobei die reflektierende Anordnung umfasst:
mindestens eine erste reflektierende Platte (12a) und eine zweite reflektierende Platte (12b), wobei jede reflektierende Platte abnehmbar an der anderen reflektierende Platte angebracht ist,
wobei die reflektierende Anordnung durch Lösen jeder reflektierenden Platte von jeder anderen reflektierenden Platte demontiert werden kann.

3. Reflektor nach Anspruch 2, wobei:
die reflektierende Anordnung einen Scheitelpunkt definiert, an dem die reflektierenden Platten jeweils aufeinander treffen; und
die reflektierende Anordnung weiter ein Ablaufloch (19) angrenzend an den Scheitelpunkt umfasst, um es Wasser, das von der reflektierenden Anordnung gesammelt wurde, zu erlauben, aus der reflektierenden Anordnung abzufließen.

4. Reflektor nach Anspruch 2 oder 3, wobei die reflektierende Anordnung weiter eine dritte reflektierende Platte (12c) umfasst, die an jeder anderen reflektierenden Platte abnehmbar angebracht ist und jede andere reflektierende Platte in einem rechten Winkel trifft.

5. Reflektor nach einem der Ansprüche 2-4, wobei:
mindestens eine der ersten und zweiten reflektierenden Platte ein Steckelement (14a, 14b) umfasst; und
mindestens die andere der ersten und zweiten reflektierenden Platte ein Buchsenelement (14c) zum Aufnehmen des Steckelements umfasst.

6. Reflektor nach Anspruch 5, wobei:
die reflektierende Anordnung eine konkave Seite zum Reflektieren des Strahls und eine konvexe Seite der konkaven Seite entgegengesetzt definiert;
die reflektierende Anordnung weiter mindestens einen Zwischenverbinder (18) an der konvexen Seite umfasst; und
der Zwischenverbinder mindestens zwei Öffnungen (18a, 18c) zum Aufnehmen abnehmbarer Befestigungselemente umfasst, um den Zwischenverbinder an der reflektierenden Platte mit dem Steckelement und an der reflektierenden Platte mit dem Buchsenelement zu sichern.

7. Reflektor nach einem der Ansprüche 1-6, der weiter ein radarabsorbierendes Material zum Verhindern von Mehrwegereflexionen des Strahls umfasst.

8. Reflektor nach einem der Ansprüche 1-7, wobei die reflektierende Anordnung als ein Dieder, ein Trieder, eine Kugel oder ein Zylinder gestaltet ist.

9. Reflektor nach einem der Ansprüche 1-8, wobei der einzige lineare Verschieber einen Spindelhubantrieb umfasst.

10. Reflektor nach Anspruch 9, wobei mindestens eine Umdrehung des Spindelhubantriebs eine lineare Verschiebung der reflektierenden Anordnung um 1 mm ergibt.

11. Reflektor nach einem der Ansprüche 1-10, wobei die reflektierende Anordnung zum Reflektieren des Strahls an einen Satelliten eines Radars mit synthetischer Apertur (SAR) dient.

12. Verfahren zum Ausbringen eines Reflektors (100) zum Reflektieren eines von einer luftgestützten oder weltraumgestützten Quelle emittierten Radarstrahls, wobei:
der Reflektor umfasst:
eine reflektierende Anordnung (10) zum Reflektieren des Strahls zu der Quelle zurück;
eine Befestigungsanordnung (90) und einen einzigen linearen Verschieber (60), der dazu konfiguriert ist, die reflektierende Anordnung in der vertikalen Richtung zu verschieben, wobei die reflektierende Anordnung dazu ausgerichtet ist, den Strahl zu der luftgestützten oder weltraumgestützten Quelle zu reflektieren; und
eine Neigungsanordnung, die einen horizontalen unteren Neigungsanordnungsabschnitt und einen geneigten horizontalen oberen Neigungsanordnungsabschnitt aufweist, wobei der obere Neigungsanordnungsabschnitt abnehmbar an der reflektierenden Anordnung angebracht und in Bezug auf den unteren Neigungsanordnungsabschnitt derart geneigt ist, dass die reflektierende Anordnung in Bezug auf die Horizontale geneigt ist, und wobei der obere Neigungsanordnungsabschnitt in Bezug auf den unteren Neigungsanordnungsabschnitt in einem Winkel von 0 Grad bis 45 Grad geneigt ist; und
das Verfahren umfasst:
Anbringen des Reflektors am Boden derart, dass der Reflektor weniger anfällig für vertikale Verschiebung aufgrund von Bodensenkungen oder -hebungen ist.

13. Verfahren nach Anspruch 12, wobei die Befestigungsanordnung weiter einen Schraubpfahl (70) umfasst, und wobei Anbringen des modularen Reflektors am Boden Verankern des Reflektors in dem Boden durch Eintreiben des Schraubpfahls in den Boden umfasst.

## Revendications

1. Réflecteur (100) destiné à réfléchir un faisceau radar émis par une source aéroportée ou spatiale, comprenant :
un ensemble réfléchissant (10) pour renvoyer le faisceau vers la source ;
un translateur linéaire unique (60) configuré pour translater l'ensemble réfléchissant ; et
un ensemble d'inclinaison (30) présentant une partie d'ensemble d'inclinaison inférieure horizontale (34) et une partie d'ensemble d'inclinaison supérieure inclinée (32), dans lequel la partie d'ensemble d'inclinaison supérieure est fixée de manière amovible à l'ensemble réfléchissant et inclinée par rapport à la partie d'ensemble d'inclinaison inférieure de telle sorte que l'ensemble réfléchissant est incliné par rapport à l'horizontale, et dans lequel la partie d'ensemble d'inclinaison supérieure est inclinée par rapport à la partie d'ensemble d'inclinaison inférieure à un angle allant de 0 degré à 45 degrés,
dans lequel le translateur linéaire unique est configuré pour translater l'ensemble réfléchissant dans la direction verticale avec l'ensemble réfléchissant orienté de manière à renvoyer le faisceau vers la source aéroportée ou spatiale.

2. Réflecteur selon la revendication 1, dans lequel l'ensemble réfléchissant comprend :
au moins une première plaque réfléchissante (12a) et une deuxième plaque réfléchissante (12b), dans lequel chaque plaque réfléchissante est fixée de manière amovible à chaque autre plaque réfléchissante,
dans lequel l'ensemble réfléchissant peut être désassemblé en détachant chaque plaque réfléchissante l'une de l'autre.

3. Réflecteur selon la revendication 2, dans lequel :
l'ensemble réfléchissant définit un sommet où se rejoignent chacune des plaques réfléchissantes ; et
l'ensemble réfléchissant comprend en outre un orifice d'évacuation (19) adjacent au sommet pour permettre à l'eau qui a été collectée par l'ensemble réfléchissant de s'écouler hors de l'ensemble réfléchissant.

4. Réflecteur selon la revendication 2 ou la revendication 3, dans lequel l'ensemble réfléchissant comprend en outre une troisième plaque réfléchissante (12c) fixée de manière amovible à chaque autre plaque réfléchissante et rejoignant chaque autre plaque réfléchissante à un angle droit.

5. Réflecteur selon l'une quelconque des revendications 2 à 4, dans lequel :
au moins une des première et deuxième plaques réfléchissantes comprend un élément mâle (14a, 14b) ; et
au moins l'autre des première et deuxième plaques réfléchissantes comprend un élément femelle (14c) destiné à recevoir l'élément mâle.

6. Réflecteur selon la revendication 5, dans lequel :
l'ensemble réfléchissant définit un côté concave pour réfléchir le faisceau et un côté convexe opposé au côté concave ;
l'ensemble réfléchissant comprend en outre au moins un connecteur intermédiaire (18) sur le côté convexe ; et
le connecteur intermédiaire comprend au moins deux ouvertures (18a, 18c) destinées à recevoir des fixations amovibles pour fixer le connecteur intermédiaire à la plaque réfléchissante avec l'élément mâle et à la plaque réfléchissante avec l'élément femelle.

7. Réflecteur selon l'une quelconque des revendications 1 à 6, comprenant en outre un matériau absorbant les ondes radar pour empêcher des réflexions à trajets multiples du faisceau.

8. Réflecteur selon l'une quelconque des revendications 1 à 7, dans lequel l'ensemble réfléchissant a la forme d'un dièdre, d'un trièdre, d'une sphère ou d'un chapeau haut-de-forme.

9. Réflecteur selon l'une quelconque des revendications 1 à 8, dans lequel le translateur linéaire unique comprend un vérin à vis.

10. Réflecteur selon la revendication 9, dans lequel au moins un tour du vérin à vis entraîne une translation linéaire de 1 mm de l'ensemble réfléchissant.

11. Réflecteur selon l'une quelconque des revendications 1 à 10, dans lequel l'ensemble réfléchissant est destiné à renvoyer le faisceau vers un satellite radar à synthèse d'ouverture (SAR).

12. Procédé de déploiement d'un réflecteur (100) destiné à réfléchir un faisceau radar émis par une source aéroportée ou spatiale, dans lequel :
le réflecteur comprend :
un ensemble réfléchissant (10) pour renvoyer le faisceau vers la source ;
un ensemble de montage (90) et un translateur linéaire unique (60) configuré pour translater l'ensemble réfléchissant dans la direction verticale avec l'ensemble réfléchissant orienté de manière à renvoyer le faisceau vers la source aéroportée ou spatiale ; et
un ensemble d'inclinaison présentant une partie d'ensemble d'inclinaison inférieure horizontale et une partie d'ensemble d'inclinaison supérieure inclinée, dans lequel la partie d'ensemble d'inclinaison supérieure est fixée de manière amovible à l'ensemble réfléchissant et inclinée par rapport à la partie d'ensemble d'inclinaison inférieure de telle sorte que l'ensemble réfléchissant est incliné par rapport à l'horizontale, et dans lequel la partie d'ensemble d'inclinaison supérieure est inclinée par rapport à la partie d'ensemble d'inclinaison inférieure à un angle allant de 0 degré à 45 degrés ; et
le procédé comprend :
fixer le réflecteur au sol de manière à ce que le réflecteur soit moins susceptible de subir un déplacement vertical dû à un affaissement ou à un soulèvement du terrain.

13. Procédé selon la revendication 12, dans lequel l'ensemble de montage comprend en outre un pieu à vis (70), et dans lequel la fixation du réflecteur modulaire au sol comprend un ancrage du réflecteur dans le sol en enfonçant le pieu à vis dans le sol.
